# EUROPÄISCHE PATENTANMELDUNG

(11) **EP 3 546 326 A1**
(43) Veröffentlichungstag der Anmeldung: **02.10.2019**
(21) Anmeldenummer: 19166007.5
(22) Anmeldetag: 28.03.2019
(51) Int. Cl.: B62D 53/06

(54) **VORRICHTUNG UND VERFAHREN ZUR ERHÖHUNG DER TRAKTION EINER ZUGMASCHINE**

(30) Priorität: 29.03.2018 DE 102018107696; 04.05.2018 DE 202018102498 U
(71) Anmelder: Ottl, Andreas, 82205 Gilching (DE)
(72) Erfinder: Ottl, Andreas, 82205 Gilching (DE)
(74) Vertreter: Knöner, Gregor

(57) **Zusammenfassung**

Es wird eine Vorrichtung zur Erhöhung der Traktion einer Zugmaschine (101), an die mittels einer Kupplung (110) ein Auflieger (102) gekoppelt ist, bereitgestellt. Die Vorrichtung (10) umfasst mindestens eine Versteifungseinrichtung (20, 40), die ausgestaltet ist, um mit dem Auflieger (101) und der Zugmaschine (102) zusammenzuwirken und einer Kippbewegung des Aufliegers (102) relativ zur Zugmaschine (101) derart entgegenzuwirken, dass die Kraft erhöht wird, die der Auflieger (102) auf einen hinteren Bereich der Zugmaschine (101) aufbringt. Weiterhin wird ein entsprechendes Verfahren zur Erhöhung der Traktion bereitgestellt.

## Beschreibung

### Gebiet der Erfindung

Die vorliegende Erfindung betrifft eine Vorrichtung zur Erhöhung der Traktion einer Zugmaschine, an die mittels einer Kupplung ein Auflieger gekoppelt ist, sowie eine entsprechende Zugmaschine und einen entsprechenden Auflieger. Die Erfindung betrifft des Weiteren ein Verfahren zur Erhöhung der Traktion einer Zugmaschine.

### Hintergrund der Erfindung

Zum Transport schwerer Güter und insbesondere von Schüttgut werden häufig Sattelzüge eingesetzt, die aus einer Zugmaschine und einem Auflieger bestehen, insbesondere aus einer Sattelzugmaschine und einem Sattelauflieger. Bei einem solchen Gespann ist die Zugmaschine mit einer Sattelkupplung versehen. An dem Auflieger ist ein entsprechendes Gegenstück, beispielsweise ein Königszapfen angebracht, der in die Sattelkupplung eingreift. In der Eingriffsstellung wird der Königszapfen in der Sattelkupplung verriegelt, sodass die Zugmaschine den Auflieger ziehen kann.

Für den Transport von Schüttgut werden Auflieger mit Kippkasten verwendet. Durch Kippen des Kippkastens kann das Schüttgut entladen werden. Derartige Auflieger werden auch als Sattelkipper bezeichnet. Beim Entladen von Schüttgut durch Kippen des Kippkastens verbleibt in der Regel eine Restmenge des Schüttguts im Kippkasten. Um die Restmenge des Schüttguts zu entladen, wird das Gespann dabei eine bestimmte Strecke vorwärts gefahren, so dass das restliche Schüttgut entweichen kann. Das Gewicht des in dem Kippkasten verbleibenden Schüttguts belastet jedoch den hinteren Bereich des Aufliegers, wodurch der vordere Bereich des Aufliegers entlastet wird. Über die Sattelkupplung wird dabei auch der hintere Bereich der Zugmaschine, in dem sich die Antriebsräder befinden, entlastet, so dass in derartigen Situationen die Traktion der Zugmaschine verringert wird. Insbesondere bei weichem Untergrund schneiden die Räder des Aufliegers, die durch das restliche Schüttgut belastet sind, in den Boden ein, so dass eine höhere Zugkraft zum Bewegen des Aufliegers notwendig ist. Dies führt regelmäßig zu dem Problem, dass die Traktion der Zugmaschine nicht mehr ausreichend ist, um den Auflieger zum Entladen der Restmenge nach vorne zu ziehen.

Aus dem Stand der Technik sind verschiedene Lösungen dieses Problems bekannt. Regelmäßig wird ein weiteres Fahrzeug, wie beispielsweise ein Bagger oder eine Raupe dazu eingesetzt, das Gespann eine entsprechende Strecke vorzuziehen, bis das restliche Schüttgut entladen ist. Ein solches Vorgehen ist jedoch zeit- und damit auch kostenintensiv. Eine weitere Lösung ist das Vorsehen eines hydraulischen Vorderradantriebs an der Zugmaschine. Dabei werden die Vorderräder der Zugmaschine über das hydraulische System der Zugmaschine angetrieben. Die zusätzliche Traktion ist in der Regel ausreichend, um das Schüttgut vollständig zu entladen. Eine derartige Vorrichtung ist jedoch aufwendig zu installieren und teuer. Aufgrund der Komplexität eines derartigen hydraulischen Antriebs steigen damit auch die Fehleranfälligkeit und die Wartungskosten. Eine weitere vorbekannte Lösung ist das Antreiben einer Achse des Aufliegers. Diese Lösung hat jedoch dieselben Nachteile wie das Bereitstellen eines hydraulischen Vorderradantriebs für die Zugmaschine.

Es ist wünschenswert, das Entladen eines derartigen Sattelkippers ohne Hilfe von weiteren Fahrzeugen zu ermöglichen. Weiterhin ist es wünschenswert, die Komplexität der vorab beschriebenen Lösungen und die damit verbundenen hohen Kosten zu vermeiden.

### Zusammenfassung der Erfindung

Dementsprechend ist eine Aufgabe der vorliegenden Erfindung, die vorab genannten Nachteile zumindest teilweise zu vermeiden oder zu verringern. Insbesondere ist es eine Aufgabe der vorliegenden Erfindung, die Traktion einer Zugmaschine mit einem Auflieger zu verbessern.

Diese Aufgabe wird mit Hilfe der Merkmale der unabhängigen Ansprüche gelöst. In den abhängigen Ansprüchen sind bevorzugte Ausführungsformen der Erfindung beschrieben.

Gemäß einem Aspekt der vorliegenden Erfindung wird eine Vorrichtung zur Erhöhung der Traktion einer Zugmaschine, an die mittels einer Kupplung ein Auflieger gekoppelt ist, bereitgestellt. Die Vorrichtung umfasst mindestens eine Versteifungseinrichtung, die ausgestaltet ist, um mit dem Auflieger und der Zugmaschine zusammenzuwirken. Die Versteifungseinrichtung ist insbesondere ausgestaltet, um einer Kippbewegung des Aufliegers relativ zur Zugmaschine derart entgegenzuwirken, dass die Kraft erhöht wird, die der Auflieger auf einen hinteren Bereich der Zugmaschine aufbringt. Durch das Versteifen der Verbindung zwischen Zugmaschine und Auflieger kann somit dem Entlasten des hinteren Bereichs der Zugmaschine entgegengewirkt werden, das beim Entladen durch den verbleibenden Rest an Schüttgut verursacht wird.

Der hintere Bereich der Zugmaschine ist ein Bereich, der hinter dem Führerhaus der Zugmaschine, insbesondere hinter dem Schwerpunkt der Zugmaschine liegt. Der hintere Bereich ist beispielsweise der Bereich, in dem Zugmaschine und Auflieger im gekoppelten Zustand überlappen, insbesondere ein Bereich um die angetriebenen Hin terräder.

Beispielsweise kann die Versteifungseinrichtung einer Kippbewegung des Aufliegers relativ zur Zugmaschine um eine Drehachse quer zur Längsachse der Zugmaschine in einer Richtung entgegenwirken, die einem Absenken des hinteren Teils des Aufliegers und/oder einem Anheben eines vorderen Teils des Aufliegers entspricht. Die Drehachse der Kippbewegung entspricht beispielsweise einer Lagerung der Kupplung, insbesondere der Lagerung einer entsprechenden Sattelkupplung.

Durch das Versteifen der Verbindung zwischen Zugmaschine und Auflieger und die damit erhöhte Kraft, die auf den hinteren Bereich der Zugmaschine aufgebracht wird, erhöht sich die Kraft auf die im hinteren Bereich der Zugmaschine angeordneten Antriebsräder, so dass die Traktion der Zugmaschine verbessert wird. Mit der erfindungsgemäßen Vorrichtung wird auch in Situationen eine ausreichende Traktion erzielt, in denen noch eine Restmenge an Schüttgut im hinteren Teil des Aufliegers verbleibt. Das Gespann kann damit das Schüttgut aus eigener Kraft vollständig entladen, ohne dabei auf eine der vorab beschriebenen und aus dem Stand der Technik bekannten, komplexen Vorrichtungen zurückgreifen zu müssen.

Insbesondere wird mit der Versteifungseinrichtung eine Verringerung des Abstandes zwischen Rahmen der Zugmaschine und Bodenteil des Aufliegers in einen Bereich hinter der Kupplung bzw. einer Vergrößerung des Abstandes zwischen dem Rahmen der Zugmaschine und dem Bodenteil des Aufliegers in einen Bereich vor der Kupplung entgegengewirkt. Die relativen Positionsangaben "vor" und "hinter" sind bei einer Zugmaschine bzw. einem Auflieger klar definiert und beziehen sich auf die Fahrtrichtung dieser.

Bei einer Ausführungsform weist die Vorrichtung eine hintere Versteifungseinrichtung auf, die ausgestaltet ist, um in Fahrtrichtung hinter der Kupplung angeordnet zu werden. Die hintere Versteifungseinrichtung ist ausgestaltet, um sich an dem Auflieger abzustützen und auf die Zugmaschine eine Kraft aufzubringen, oder um sich an der Zugmaschine abzustützen und auf den Auflieger eine Kraft aufzubringen. Insbesondere ist die hintere Versteifungseinrichtung ausgestaltet, um Zugmaschine und Auflieger in einem Bereich hinter der Kupplung auseinanderzudrücken. Dadurch kann die auf den hinteren Bereich der Zugmaschine wirkende Kraft vergrößert werden, sodass aufgrund eines höheren Anpressdrucks der Hinterräder der Zugmaschine eine verbesserte Traktion erzielt wird.

Die Versteifungseinrichtung kann eine eingefahrene Stellung bzw. "Schlafstellung" aufweisen, in der die Kippbewegung zwischen Auflieger und Zugmaschine freigegeben ist sowie eine ausgefahrene Stellung, in der die Versteifungseinrichtung der Kippbewegung zwischen Auflieger und Zugmaschine entgegenwirkt. Die Versteifungseinrichtung kann beispielsweise ein Blockierelement aufweisen, das durch Ausdehnung bzw. durch Ausfahren die Versteifungseinrichtung von der eingefahrenen Stellung in die ausgefahrene Stellung bringt. Das Blockierelement kann auch als ausfahrbares Element bezeichnet werden. In der eingefahrenen Stellung wird damit ein normaler Fahrbetrieb des Gespanns ermöglicht, in dem der Auflieger gegenüber der Zugmaschine Kippbewegungen ausführen kann, insbesondere um ein entsprechendes Lager einer Sattelkupplung.

Die Versteifungseinrichtung weist vorzugsweise ein Blockierelement in Form eines Balges, einer Blase oder eines pneumatischen bzw. hydraulischen Zylinders auf. Andere Ausführungen sind ebenfalls denkbar, wie beispielsweise ein durch Drehbewegung ausfahrbarer Bolzen oder ähnliches.

Bei einer Ausführungsform weist die Versteifungseinrichtung einen pneumatischen Anschluss auf, der an ein Druckluftsystem der Zugmaschine oder des Ausfliegers anschließbar ist. Das Blockierelement ist mittels des pneumatischen Anschlusses mit Druckluft beaufschlagbar. Bei einer derartigen Ausgestaltung kann die Versteifung der Verbindung zwischen Zugmaschine und Auflieger auf einfache Art und Weise erfolgen, insbesondere kann das bestehende Druckluftsystem der Zugmaschine oder des Aufliegers zu diesem Zweck verwendet werden. Die Komplexität und die Kosten der Vorrichtung können somit gering gehalten werden.

Besonders bevorzugt weist die Versteifungseinrichtung einen pneumatisch ausfahrbaren Balg auf.

Die Versteifungseinrichtung, insbesondere der Balg, kann ein erstes Ende aufweisen, das ausgestaltet ist, um an dem Auflieger oder der Zugmaschine angebracht zu werden. Die Versteifungseinrichtung, insbesondere der Balg kann des Weiteren ein zweites gegenüberliegendes Ende aufweisen, an dem ein Abschlusselement zur Kraftübertragung vorgesehen ist, wie beispielsweise eine Pfanne, die mit einem Ende des Balgs zusammenwirkt. Somit lässt sich mittels der Versteifungseinrichtung auf einfache und effektive Weise eine Kraft bzw. ein Anpressdruck auf die Zugmaschine übertragen. Die Pfanne kann beispielsweise eine rechteckige, quadratische oder kreisförmige/ovale Bodenfläche und einen Rand aufweisen, wobei in der Pfanne ein Ende des Blockierelements aufgenommen wird, insbesondere ein Ende des Balgs.

Die Vorrichtung kann des Weiteren eine Konsole aufweisen, die an einem Rahmen der Zugmaschine bzw. an einem Bodenteil des Aufliegers anbringbar ist und die ausgestaltet ist, um mit dem Abschlusselement des Balgs zusammenzuwirken, wenn sich die Versteifungseinrichtung in der ausgefahrenen Stellung befindet. Es findet somit eine Kraftübertragung vom Balg über das Abschlusselement auf die Konsole statt, sodass einer Kippbewegung zwischen Auflieger und Zugmaschine effektiv entgegengewirkt werden kann und eine entsprechende Kraft auf den hinteren Bereich der Zugmaschine aufgebracht wird.

Bei einer Ausführungsform weist die Vorrichtung des Weiteren einen Einfahrmechanismus (bzw. eine Einfahreinrichtung) auf, der ausgestaltet ist, um die Versteifungseinrichtung in eine eingefahrene Stellung bzw. in die Schlafstellung zu bringen, in der die Versteifungseinrichtung die Kippbewegung freigibt. Eine derartige Einfahreinrichtung ist insbesondere dann vorteilhaft, wenn die Versteifungseinrichtung nicht von selbst in die eingefahrene Stellung zurückkehrt, nachdem die Versteifungseinrichtung nicht mehr aktiviert ist, beispielsweise nicht mehr Druckluft beaufschlagt wird. Der Einfahrmechanismus kann an ein Abschlusselement der Versteifungseinrichtung gekoppelt sein. Insbesondere kann der Einfahrmechanismus bzw. die Einfahreinrichtung an dem Abschlusselement angebracht sein und ausgestaltet sein, um einen Balg der Versteifungseinrichtung von der ausgefahrenen Stellung in die eingefahrene Stellung zu bringen.

Die Einfahreinrichtung kann beispielweise Zugseile aufweisen, die an dem Abschlusselement bzw. der Pfanne befestigt sind, und die mittels eines Federmechanismus eine rückstellende Kraft auf das Abschlusselement aufbringen, mit der das Blockierelement, beispielsweise der Balg, in die eingefahrene Stellung bringbar ist. Insbesondere können die Zugseile an einem Rand der Pfanne oder entsprechenden Laschen befestigt sein. Der Einfahrmechanismus kann auch eine Umlenkrolle für das Zugseil aufweisen. Damit kann ein rückstellendes Element, wie der Federmechanismus, auf platzsparende und nicht störende Weise z.B. an dem Auflieger angeordnet werden. Andere Ausgestaltungen der Einfahreinrichtung sind selbstverständlich ebenfalls denkbar.

Bei einer Ausführungsform weist die Vorrichtung eine vordere Versteifungseinrichtung auf, die ausgestaltet ist, um in Fahrtrichtung vor der Kupplung angeordnet zu werden. Die vordere Versteifungseinrichtung ist ausgestaltet, um zwischen Auflieger und Zugmaschine einen Zug auszuüben. Durch ein derartiges Ausüben eines Zugs im vorderen Bereich des Aufliegers, der vor der Kupplung liegt, ist es ebenfalls möglich, der Kippbewegung entgegenzuwirken und die Verbindung zwischen Zugmaschine und Auflieger zu versteifen, so dass eine größere Kraft auf den hinteren Bereich der Zugmaschine ausgeübt wird. Dadurch wird gleichermaßen die Traktion verbessert.

Die vordere Versteifungseinrichtung kann beispielsweise eine Niederzugeinrichtung umfassen, mit der ein vorderer Teil des Aufliegers, der vor der Kupplung angeordnet ist, mit einer Kraft in Richtung der Zugmaschine beaufschlagbar ist. Eine derartige Niederzugeinrichtung kann beispielsweise ein Stahlseil und eine Winde umfassen, wobei die Winde an dem Auflieger oder der Zugmaschine an einer Position vor der Kupplung vorgesehen werden kann und das Stahlseil an der Zugmaschine bzw. dem Auflieger befestigt werden kann, beispielsweise mit einem Haken, um die Zugkraft aufzubringen.

Bei einer Ausführungsform umfasst die Vorrichtung eine Steuereinrichtung, mit der die Versteifungseinrichtung von einem gelösten Zustand, in dem die Kippbewegung zwischen Auflieger und Zugmaschine frei gegeben ist, in einen blockierenden Zustand gebracht werden kann, indem die Versteifungseinrichtung der Kippbewegung zwischen Auflieger und Zugmaschine entgegenwirkt. Die Steuereinrichtung kann beispielsweise ein Bedienelement oder Schaltelement umfassen, das ausgestaltet ist, um in der Führerkabine der Zugmaschine implementiert zu werden bzw. das in der Führerkabine vorgesehen ist, so dass der Fahrer der Zugmaschine zwischen dem gelösten Zustand und dem blockierenden Zustand auf einfache Weise umschalten kann.

Vorzugsweise weist die Steuereinheit ein Relaisventil auf, über das dem Blockierelement, insbesondere dem Balg Druckluft zuführbar ist. Die Steuereinheit kann des Weiteren ein Magnetventil zum Ansteuern des Relaisventils mittels Druckluft aufweisen. Eine derartige Ausgestaltung erlaubt es, das Blockierelement über den Arbeitskreis des Druckluftsystems mit Druckluft zu versorgen, so dass ein schnelles Ein- und Ausfahren des Blockierelements möglich wird. Das Relaisventil ist an einen Arbeitskreis des Druckluftsystems des Aufliegers oder der Zugmaschine anschließbar. Die Steuereinheit kann des Weiteren ein elektrisches Steuerelement, wie beispielsweise einen Schalter aufweisen, mit dem das Magnetventil elektrisch ansteuerbar ist. Die Ansteuerung des Magnetventils kann selbstverständlich auch auf andere bekannte Art und Weise erfolgen, beispielsweise über ein Bussystem oder ähnliches.

Bei einer Ausführungsform umfasst die Vorrichtung des Weiteren eine Schwenkeinrichtung, die ausgestaltet ist, um bei aktivierter Versteifungseinrichtung ein Verschwenken der Zugmaschine relativ zum Auflieger zu ermöglichen. Verschwenken bezieht sich auf die Drehung des Aufliegers relativ zur Zugmaschine, die bei Kurvenfahrt stattfindet, z.B. eine Drehung um die im Wesentlichen vertikale Drehachse der Kupplung, insbesondere um den Königszapfen. Aktivierte Versteifungseinrichtung bedeutet dabei, dass die Versteifungseinrichtung der Kippbewegung des Aufliegers relativ zur Zugmaschine entgegenwirkt, beispielsweise dass ein am Auflieger angebrachter Balg im ausgefahrenen Zustand eine Kraft auf die Zugmaschine ausübt. Mit einer derartigen Schwenkeinrichtung kann die Verbindung zwischen Zugmaschine und Auflieger versteift werden, wobei dennoch eine Kurvenfahrt ermöglicht wird.

Die Schwenkeinrichtung kann ein Element aufweisen, das bei aktivierter Versteifungseinrichtung mit einem ersten Teil der Vorrichtung ortsfest verbunden ist und das sich auf einem zweiten Teil der Vorrichtung abstützt und relativ zu diesem zweiten Teil der Vorrichtung beweglich ist, wobei das Element eine Kraft zwischen dem ersten Teil der Vorrichtung und dem zweiten Teil der Vorrichtung überträgt, um der Kippbewegung entgegenzuwirken. Ortsfest verbunden kann sowohl bedeuten, dass das Element an dem ersten Teil der Vorrichtung montiert ist, als auch dass es aufgrund der aufgebrachten Kraft und der entsprechenden Haftreibung mit dem ersten Teil ortsfest verbunden ist. Der erste Teil der Vorrichtung kann die Versteifungseinrichtung umfassen, die an dem Auflieger anbringbar bzw. angebracht ist. Der zweiter Teil der Vorrichtung kann z.B. eine Konsole oder eine Schiene sein, die an der Zugmaschine anbringbar bzw. angebracht ist.

Das Element kann auf dem zweiten Teil der Vorrichtung gleiten, abrollen oder in Bezug auf diesen Teil beweglich gelagert sein.

Beispielsweise kann die Schwenkeinrichtung mindestens ein Gleitelement aufweisen, das derart angeordnet und ausgestaltet ist, dass es bei aktivierter Versteifungseinrichtung ein Gleiten zwischen dem ersten Teil der Vorrichtung, der ortsfest an dem Auflieger anbringbar oder angebracht ist und dem zweiten Teil der Vorrichtung, der ortsfest an der Zugmaschine anbringbar oder angebracht ist, ermöglicht. Somit kann auf einfache und effektive Weise eine Kraftübertragung bei gleichzeitiger Verschwenkbarkeit erzielt werden.

Insbesondere kann die Versteifungseinrichtung ein ausfahrbares Element aufweisen, mit dem die Versteifungseinrichtung in eine ausgefahrene Stellung bringbar ist, in der die Versteifungseinrichtung der Kippbewegung des Aufliegers relativ zur Zugmaschine entgegenwirkt. Die Schwenkeinrichtung weist mindestens ein Gleitelement auf, das an dem ausfahrbaren Element angebracht ist.

Die Vorrichtung kann des Weiteren eine Konsole mit einer Gleitfläche umfassen, wobei die Konsole an der Zugmaschine bzw. dem Auflieger anbringbar ist, und wobei die Vorrichtung derart ausgestaltet ist, dass bei aktivierter Versteifungseinrichtung das Gleitelement die Gleitfläche kontaktiert und sich auf dieser abstützt, d.h. das Gleitelement kann die Kraft zur Versteifung der Verbindung zwischen Zugmaschine und Auflieger auf die Gleitfläche übertragen. Das Gleitelement kann dann auf der Gleitfläche gleiten, wenn die Zugmaschine relativ zum Auflieger verschwenkt wird, beispielsweise bei einer Kurvenfahrt.

Bei anderen Ausführungsformen kann das Gleitelement oder ein anderes Element, das die Relativbewegung ermöglicht, auch an der Konsole angebracht sein und auf einer Fläche des ausfahrbaren Elements gleiten, abrollen oder entsprechend gelagert sein.

Das ausfahrbare Element kann ein Balg oder ein pneumatischer/hydraulischer Zylinder sein, und die Versteifungseinrichtung kann ein Abschlusselement aufweisen, das an einem Ende des ausfahrbaren Elements angebracht ist. Das mindestens eine Gleitelement kann an dem Abschlusselement angebracht sein.

Das Element, insbesondere das Gleitelement, kann einen Körper aus Kunststoff umfassen. Beispielsweise kann ein Kunststoff verwendet werden, der auf Polyamid (PA) oder Nylon basiert. Insbesondere kann ein Kunststoff verwendet werden, der gute Gleiteigenschaften aufweist. Die Konsole bzw. die Gleitfläche können aus Stahl gefertigt sein. Sie können lackiert sein oder mit einer Beschichtung versehen sein, die vorteilhafte Gleiteigenschaften aufweist.

Zusätzlich oder alternativ kann die Schwenkeinrichtung eine Schiene und einen Schlitten aufweisen, wobei der Schlitten auf der Schiene läuft. Die Schiene ist an dem Auflieger oder der Zugmaschine anbringbar. Die Versteifungseinrichtung kann sich an dem Schlitten abstützen, wenn sie aktiviert ist. Der Schlitten kann ein Lager, z.B. Kugel- oder Walzenlager aufweisen, so dass die Reibung zwischen Schlitten und Schiene gering gehalten werden kann. Der Schlitten kann beispielsweise mit Federn oder anderen Rückstellelementen in einer Ruheposition auf der Schiene gehalten werden, wenn die Versteifungseinrichtung nicht aktiviert ist.

Der erste Teil der Vorrichtung umfasst beispielsweise die Versteifungseinrichtung, die ausgestaltet ist, um an dem Auflieger angebracht zu werden. Der zweite Teil der Vorrichtung umfasst eine Konsole, die ausgestaltet ist, um an der Zugmaschine angebracht zu werden. Die Schiene kann an der Konsole angebracht sein. Alternativ kann keine Konsole vorgesehen sein, sondern die Schiene kann direkt an der Zugmaschine anbringbar sein bzw. angebracht sein. In beiden Fällen kann sich das Blockierelement bzw. das ausfahrbare Element auf dem Schlitten abstützen, wenn es ausgefahren ist. Somit kann eine Kraft auf den hinteren Bereich der Zugmaschine aufgebracht werden, wobei eine Verschwenkung zwischen Zugmaschine und Auflieger möglich bleibt.

Bei einer Ausführungsform umfasst die Vorrichtung des Weiteren ein bewegliches Element, das ausgestaltet ist, um an dem Auflieger oder der Zugmaschine beweglich oder verschwenkbar angebracht zu werden und mit der Versteifungseinrichtung zusammenzuwirken. Die Versteifungseinrichtung weist ein Element auf, das ausgestaltet ist, um auf das bewegliche Element eine Kraft oder einen Zug auszuüben, oder eine Verriegelung mit dem beweglichen Element bereitzustellen, um der Kippbewegung des Aufliegers relativ zur Zugmaschine entgegenzuwirken. Beispiele für ein derartiges Element sind das vorab genannte Blockierelement oder die Niederzugeinrichtung. Das bewegliche Element ist derart ausgestaltet, dass es sich gemeinsam mit dem Element der Versteifungseinrichtung bewegt, wenn der Auflieger relativ zur Zugmaschine um eine vertikale Achse der Kupplung (110) verschwenkt wird. Insbesondere ist das bewegliche Element ausgestaltet, um die Kraft oder den Zug auf den Teil des Gespanns (Auflieger bzw. die Zugmaschine) aufzubringen, an dem es angebracht ist. Beispielsweise ist das Blockierelement und/oder die Niederzugeinrichtung an dem Auflieger anbringbar oder angebracht, und das bewegliche Element ist an der Zugmaschine anbringbar oder angebracht, oder umgekehrt. Das bewegliche Element ist nun derart ausgestaltet, dass es sich gemeinsam mit dem Blockierelement oder der Niederzugeinrichtung bewegt, wenn das Gespann eine Kurve fährt, d.h. wenn der Auflieger relativ zur Zugmaschine um eine im Wesentlichen vertikale Drehachse der Kupplung verschwenkt wird. Somit kann die Traktion der Zugmaschine mittels der Versteifungseinrichtung auch in der Kurvenfahrt erhöht werden. Bei anderen Ausgestaltungen kann das Element der Versteifungseinrichtung auch an dem beweglichen Element angebracht sein.

Das bewegliche Element kann sich nur dann bewegen, wenn die Vorrichtung aktiviert ist und die Kippbewegung einschränkt (z.B. ausgefahrenes Blockierelement, aktivierte Verriegelung und/oder aktivierte Niederzugeinrichtung), oder es kann sich stets mit der Verteifungseinrichtung bewegen. Beispielsweise kann als bewegliches Element eine Platte, eine Scheibe, ein Kranz, ein Scheibensegment oder ein Kranzsegment vorgesehen sein, die bzw. das um die vertikale Drechachse der Kupplung drehbar gelagert ist. Auf diesem kann sich die Blockiereinrichtung abstützen, oder es kann ein Seil oder eine Kette einer Niederzugeinrichtung mit diesem verbunden werden. Die Blockiereinrichtung bzw. die Niederzugeinrichtung können auch an dem beweglichen Element angebracht sein und gemeinsam mit diesem gegenüber dem Teil des Gespanns verschwenkbar sein, an dem das bewegliche Element angebracht ist. Das bewegliche Element kann auch eine Platte oder ein Segment der (Sattel-)Kupplung sein oder umfassen, z.B. eine Sattelkupplungsplatte. Die Platte oder das Segment kann relativ zu einer Montageplatte der Sattelkupplung an der Zugmaschine drehbar ausgestaltet sein. Es sind Ausgestaltungen denkbar, bei denen das bewegliche Element auf einer Schiene oder einem Lager läuft, die bzw. das bogenförmig (als Kreissegment) um die vertikale Drehachse der Kupplung ausgestaltet ist und an der Zugmaschine anbringbar oder angebracht ist. Bei anderen Ausgestaltungen kann das bewegliche Element beispielsweise am Auflieger anbringbar oder angebracht sein und als um den Königszapfen verschwenkbar ausgestaltet sein. Andere Ausgestaltungen sind selbstverständlich ebenfalls denkbar.

Das bewegliche Element kann insbesondere das vorab beschriebene Gleitelement oder der vorab beschriebene Schlitten sein.

Des Weiteren kann eine Warnvorrichtung vorgesehen sein, die ein Warnsignal ausgibt, wenn das Gleitelement auf der Gleitfläche oder das bewegliche Element eine vorbestimmte Position erreicht. Die Warnvorrichtung kann beispielsweise einen elektrischen oder mechanischen Schalter aufweisen, der an der Gleitfläche angebracht ist und von dem Gleitelement oder einem anderen an der Versteifungseinrichtung angebrachten Betätigungselement aktiviert wird. Die Warnvorrichtung kann beispielsweise ein Signal in das Führerhaus der Zugmaschine übermitteln. Dadurch kann sichergestellt werden, dass der Auflieger gegenüber der Zugmaschine nicht so weit verschwenkt wird, dass die Versteifungseinrichtung beschädigt wird oder dass sie ihre Funktion nicht mehr ausreichend erfüllt.

Bei einer Ausführungsform weist die Versteifungseinrichtung ein erstes Ende, das ausgestaltet ist, um an dem Auflieger oder der Zugmaschine angebracht zu werden, und ein zweites Ende auf, wobei die Vorrichtung des Weiteren ein Stabilisierungselement aufweist, das an dem zweiten Ende der Versteifungseinrichtung angebracht ist, beispielsweise an dem vorab genannten Abschlusselement. Das Stabilisierungselement ist ausgestaltet, um zumindest bei aktivierter Versteifungseinrichtung diese in einer Richtung zu stützen, die senkrecht zur der Richtung ist, in der die Versteifungseinrichtung Kraft aufbringt, insbesondere senkrecht zu der Richtung, in der ein ausfahrbares Element der Versteifungseinrichtung ausfahrbar ist. Durch ein derartiges Abstützen der Versteifungseinrichtung kann eine Beschädigung dieser vermieden werden. Insbesondere bei Kurvenfahrten mit aktivierter Versteifungseinrichtung ist ein solches Stabilisierungselement von Vorteil.

Das Stabilisierungselement kann eine Schwinge aufweisen oder als solche ausgestaltet sein, die an einem Ende an dem Auflieger bzw. der Zugmaschine anbringbar oder angebracht ist und deren anderes Ende an dem zweiten Ende der Versteifungseinrichtung angebracht ist. Die Schwinge kann ein Ein- und Ausfahren der Versteifungseinrichtung in vertikaler Richtung ermöglichen und diese gleichzeitig gegen Kräfte in horizontaler Richtung schützen bzw. abstützen.

Die Schwinge weist beispielsweise ein Halteplatte auf, die an dem Auflieger anbringbar ist, einen Arm, der gelenkig mit der Halteplatte verbunden ist, sowie eine Gelenkverbindung, mit der der Arm mit dem zweiten Ende der Versteifungseinrichtung verbunden ist. Das zweite Ende der Versteifungseinrichtung kann beispielsweise ein Abschlusselement (insbesondere eine Abschlussplatte oder eine Pfanne) sein, das an einem Ende eines ausfahrbaren Elements, insbesondere eines Balgs oder pneumatischen Zylinders, angebracht ist. Der Arm kann mit dem Abschlusselement über ein Gelenk verbunden sein. Die Gelenkverbindungen können mittels Scharnieren implementiert werden, die nur um eine Achse drehbar sind, und die in den anderen Richtungen eine steife Verbindung bereitstellen. Somit kann eine Bewegung des zweiten Endes der Versteifungseinrichtung in horizontaler Richtung wirksam verringert oder unterbunden werden. Dies ist insbesondere bei Ausgestaltungen von Vorteil, bei denen für Kurvenfahrten eine Schwenkeinrichtung vorgesehen ist (z.B. mit Gleitelementen), da die Schwenkeinrichtung Kräfte quer zur Fahrtrichtung auf das zweite Ende der Versteifungseinrichtung aufbringen kann.

Die Schwinge kann in Fahrtrichtung vor der Versteifungseinrichtung angeordnet sein. Ebenfalls ist es denkbar, zusätzlich oder alternativ eine Schwinge an einer oder beiden Seiten der Versteifungseinrichtung vorzusehen, oder eine Schwinge vorzusehen, die hinter der Versteifungseinrichtung angeordnet ist.

Andere Ausgestaltungen des Stabilisierungselements sind selbstverständlich denkbar. So können beispielsweise teleskopische Führungsschienen als Stabilisierungselement vorgesehen sein, die den Balg oder pneumatischen Zylinder in ausgefahrenem Zustand abstützen und Querkräfte aufnehmen.

Bei einer bevorzugten Ausführungsform wird eine Vorrichtung zur Erhöhung der Traktion einer Zugmaschine, an die mittels einer Kupplung ein Auflieger gekoppelt ist, bereitgestellt, wobei die Vorrichtung umfasst: einen Balg, der ein erstes Ende aufweist, das ausgestaltet ist, um an dem Auflieger angebracht zu werden; einen Druckluftanschluss, über den der Balg mit Druckluft beaufschlagbar ist, um den Balg von einer eingefahrenen Stellung in eine ausgefahrene Stellung zu bringen; ein Abschlusselement, das an einem zweiten Ende des Balgs angebracht ist; und eine Einfahreinrichtung , die an dem Abschlusselement angebracht ist und die ausgestaltet ist, um den Balg von der ausgefahrenen Stellung in die eingefahrene Stellung zu bringen.

Die Vorrichtung kann weiterhin aufweisen: eine Konsole, die ausgestaltet ist, um an der Zugmaschine (101) angebracht zu werden und eine Kraft aufzunehmen, die der Balg in der ausgefahrenen Stellung auf die Konsole aufbringt; ein Stabilisierungselement, das an dem Abschlusselement verschwenkbar, insbesondere gelenkig, angebracht ist; und eine Schwenkeinrichtung, die eine Bewegung der Konsole relativ zu dem Abschlusselement ermöglicht, wenn der Balg in der ausgefahrenen Stellung eine Kraft auf die Konsole aufbringt, wobei die Bewegung ermöglicht wird in einer Richtung senkrecht zu der Richtung, in der die Kraft aufgebracht wird, insbesondere in einer Richtung, die einem Verschwenken der Konsole relativ zu dem Abschlusselement bei Kurvenfahrt von Zugmaschine und Auflieger entspricht.

Gemäß einem weiteren Aspekt der vorliegenden Erfindung wird ein Auflieger oder eine Zugmaschine, insbesondere ein Sattelauflieger oder eine Sattelzugmaschine bereitgestellt, wobei der Auflieger bzw. die Zugmaschine eine Vorrichtung in einer der vorab beschriebenen Ausführungsformen oder Konfigurationen aufweist. Beispielsweise wird ein Auflieger bereitgestellt, bei dem an einem Bodenteil bzw. Rahmen in einem Bereich, der hinter dem Königszapfen liegt, eine Versteifungseinrichtung derart angebracht ist, dass sie bei Betätigung eine Kraft auf den hinteren Bereich der Zugmaschine aufbringt (wenn der Auflieger an die Zugmaschine gekoppelt ist). Gleichermaßen kann eine Zugmaschine bereitgestellt werden, bei der die Versteifungseinrichtung in einem entsprechenden Bereich hinter der Kupplung montiert ist. Der Auflieger oder die Zugmaschine kann zusätzlich oder alternativ eine Versteifungseinrichtung aufweisen, die wie vorab beschrieben vor der Kupplung montiert ist.

Gemäß einem weiteren Aspekt der vorliegenden Erfindung wird ein Gespann, insbesondere ein Sattelzug, mit einem Auflieger und einer Zugmaschine bereitgestellt, wobei das Gespann eine Vorrichtung in einer der vorab beschriebenen Konfigurationen aufweist. Die Versteifungseinrichtung kann wiederum an Auflieger und/oder Zugmaschine montiert werden und das Gespann kann eine vordere Versteifungseinrichtung und/oder eine hintere Versteifungseinrichtung umfassen.

Der Auflieger ist vorzugsweise ein Sattelauflieger mit Kippkasten bzw. Kippmulde.

Gemäß einem weiteren Aspekt der vorliegenden Erfindung wird ein Verfahren zur Erhöhung der Traktion einer Zugmaschine, an die mittels einer Kupplung ein Auflieger gekoppelt ist, bereitgestellt. Das Verfahren umfasst das Bestätigen einer Versteifungseinrichtung, die mit dem Auflieger und der Zugmaschine zusammenwirkt und einer Kippbewegung des Aufliegers relativ zur Zugmaschine derart entgegenwirkt, dass die Kraft erhöht wird, die der Auflieger auf einen hinteren Bereich der Zugmaschine aufbringt. Mit einem derartigen Verfahren können ähnliche wie die vorab beschriebenen Vorteile verwirklicht werden. Das Verfahren kann insbesondere mit einer Vorrichtung in einer der vorab beschriebenen Konfigurationen durchgeführt werden.

Der Auflieger kann ein Sattelauflieger mit Kippmulde sein und das Verfahren kann des Weiteren umfassen: Vor oder während des Entladens von Schüttgut aus der Kippmulde, Ausfahren der Versteifungseinrichtung von einem eingefahrenen Zustand in einen ausgefahrenen Zustand, in dem die Versteifungseinrichtung Kraft auf den hinteren Bereiche der Zugmaschine aufbringt. Die Traktion der Zugmaschine wird dadurch verbessert, so dass die Zugmaschine aus eigener Kraft vorfahren kann, um in der Kippmulde verbliebenes Schüttgut zu entleeren. Es kann eine entsprechend ausgestaltete Steuereinrichtung vorgesehen sein.

Weiterhin wird ein Verfahren zur Ausstattung eines Gespanns mit einer Vorrichtung zur Erhöhung der Traktion einer Zugmaschine bereitgestellt. Das Verfahren umfasst das Bereitstellen einer Vorrichtung in einer der vorab beschriebenen Konfigurationen sowie das Anbringen der Versteifungseinrichtung dieser an einem Auflieger und/oder der Zugmaschine derart, dass die Versteifungseinrichtung bei Betätigung mit dem Auflieger und der Zugmaschine zusammenwirkt und eine Kippbewegung des Aufliegers relativ zur Zugmaschine derart entgegenwirkt, dass die Kraft erhöht wird, die der Auflieger auf einen hinteren Bereich der Zugmaschine aufbringt. Mit einem derartigen Verfahren lässt sich ein Gespann auf einfache Art und Weise mit einer Vorrichtung ausstatten, die die Traktion des Gespanns beim Entleeren eines Kippkastens deutlich erhöht, wobei nur unwesentliche Modifikationen an dem Auflieger bzw. der Zugmaschine notwendig sind. Somit kann eine verbesserte Traktion auf kostengünstige Weise erzielt werden, ohne dass die Komplexität des Aufliegers bzw. der Zugmaschine wesentlich erhöht wird.

Selbstverständlich können die Merkmale der vorab beschriebenen Ausführungsformen und Aspekte der vorliegenden Erfindung miteinander kombiniert werden. Das Verfahren kann sämtliche zum Betrieb der Vorrichtung bzw. zur Montage der Vorrichtung gehörenden Schritte umfassen.

### Kurze Beschreibung der Zeichnungen

Die Erfindung wird nachfolgend unter Bezugnahme auf die beiliegenden Zeichnungen näher erläutert. In den Zeichnungen kennzeichnen gleiche Bezugszeichen gleiche oder ähnliche Elemente.
- Fig. 1: ist eine schematische Zeichnung, die ein Gespann mit einer Vorrichtung gemäß einer Ausführungsform der vorliegenden Erfindung zeigt.
- Fig. 2: ist eine schematische Zeichnung, die eine Vorrichtung mit einer hinteren Versteifungseinrichtung gemäß einer Ausführungsform der vorliegenden Erfindung zeigt.
- Fig. 3: ist eine schematische Zeichnung, die die Versteifungseinrichtung der Fig. 2 in eingefahrenem Zustand zeigt.
- Fig. 4: ist eine schematische Zeichnung, die ein Gespann mit einer Vorrichtung gemäß einer weiteren Ausführungsform der vorliegenden Erfindung zeigt.
- Fig. 5: ist eine schematische Zeichnung, die eine Vorrichtung mit einer hinteren Versteifungseinrichtung gemäß einer Ausführungsform der vorliegenden Erfindung zeigt, wobei die Vorrichtung eine Schwenkeinrichtung aufweist.
- Fig. 6: ist eine schematische Zeichnung, die eine Rückansicht eines Teils der Vorrichtung der Figur 5 zeigt.
- Fig. 7: ist eine schematische Zeichnung, die eine Vorrichtung mit einer hinteren Versteifungseinrichtung gemäß einer weiteren Ausführungsform der vorliegenden Erfindung zeigt, wobei die Vorrichtung eine Schwenkeinrichtung aufweist.

### Beschreibung beispielhafter Ausführungsformen

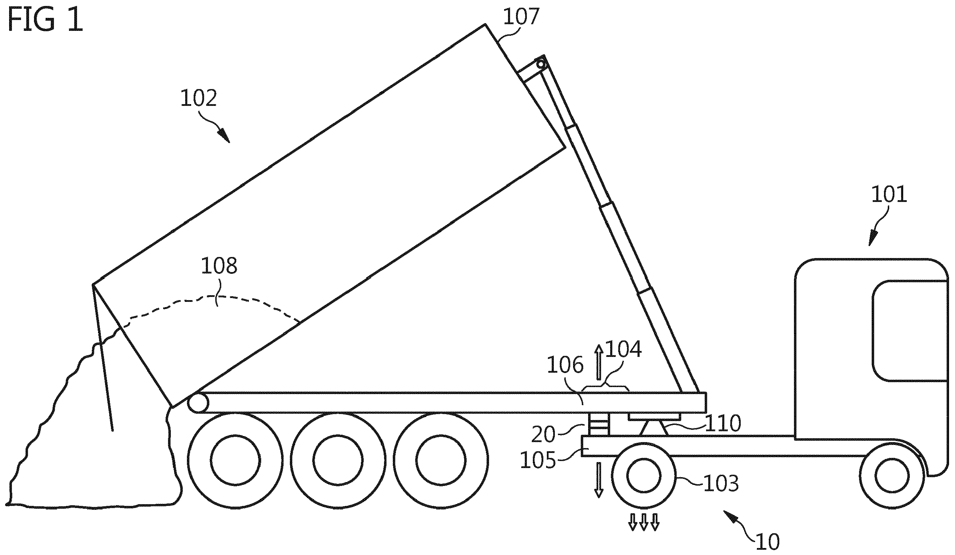

Fig. 1 zeigt beispielhaft eine Ausführungsform der erfindungsgemäßen Vorrichtung 10, die an einem Auflieger 102 montiert ist. Zugmaschine 101 und Auflieger 102 sind mittels der Kupplung 110, insbesondere einer Sattelkupplung gekoppelt und bilden ein Gespann. Der Auflieger 102 weist eine Kippmulde 107 auf, die wie dargestellt kippbar ist, um Schüttgut zu entleeren. Dabei bleibt regelmäßig eine Restmenge 108 in der Kippmulde 107 zurück. Da diese Restmenge 108 des Schüttguts auf dem hinteren Teil des Aufliegers 102 lastet, wird der vordere Teil des Aufliegers 102 entlastet, so dass nur noch eine deutlich reduzierte Kraft über die Sattelkupplung 110 auf den hinteren Bereich der Zugmaschine 101 aufgebracht wird. Da sich in diesem hinteren Bereich der Zugmaschine 101 die angetriebenen Räder 103 befinden, verliert die Zugmaschine 101 deutlich an Traktion. Die verbleibende Traktion ist bei herkömmlichen Zugmaschinen nicht mehr ausreichend, um das Gespann zum Entladen der Restmenge 108 an Schüttgut vorwärts zu bewegen.

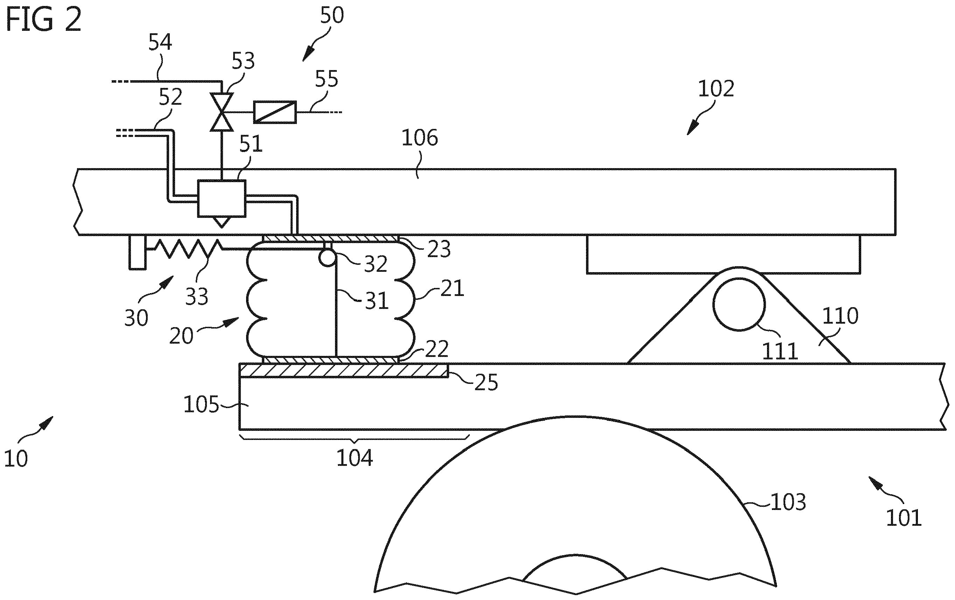

Die Sattelkupplung 110 weist in der Regel eine Lagerung auf, die in Fig. 2 mit Bezugszeichen 111 schematisch dargestellt ist. Auflieger 102 und Zugmaschine 101 sind somit nicht starr verbunden, sondern es ist eine Kippbewegung des Aufliegers relativ zur Zugmaschine möglich, wobei die Bewegung um die Achse des Lagers 111 erfolgt. Aufgrund dieser flexiblen Verbindung führt eine Entlastung des vorderen Bereichs des Aufliegers 102 auch unmittelbar zu einer Entlastung der Zugmaschine im Bereich der angetriebenen Räder 103 und somit zur verringerten Traktion. Es kann insbesondere zu einem leichten Anheben des hinteren Bereichs der Zugmaschine 101 kommen.

Die Vorrichtung 10 weist eine Versteifungseinrichtung 20 auf, die diesem Effekt entgegenwirkt. Versteifungseinrichtung 20 verhindert, dass aufgrund der Verlagerung der Belastung bei Entladen des Schüttguts eine entsprechende Kippbewegung um die Sattelkupplung 110 erfolgt, bei der sich der Rahmen 105 der Zugmaschine 101 dem Bodenteil 106 des Aufliegers 102 in dem Bereich 104 hinter der Sattelkupplung 110 annähert. Die Verbindung zwischen Auflieger 102 und Zugmaschine 101 wird auf diese Art und Weise starr gemacht, wodurch eine Verringerung der Traktion durch die vorab beschriebenen Effekte vermieden werden kann. Insbesondere kann die Versteifungseinrichtung 20 im hinteren Bereich 104 der Zugmaschine 101 eine Kraft ausüben, so dass eine höhere Anpresskraft auf die angetriebenen Räder 103 wirkt, wie in Fig.l durch Pfeile angedeutet. Die Traktion wird somit verbessert.

Die Versteifungseinrichtung 20 kann beispielsweise ausgedehnt oder ausgefahren werden, um eine entsprechende Kraft im hinteren Bereich 104 auf die Zugmaschine 101 aufzubringen. Die Versteifungseinrichtung 20 kann dabei an dem Bodenteil 106, beispielsweise einem Rahmen oder einer Bodenplatte des Aufliegers 102, montiert sein und sich an diesem abstützen. Sie kann gleichermaßen am Rahmen 105 der Zugmaschine 101 montiert sein. Die Ausdehnung bzw. das Ausfahren der Versteifungseinrichtung 20 und das Aufbringen entsprechender Kräfte auf den Auflieger 102 und die Zugmaschine 101 ist in Fig. 1 ebenfalls durch entsprechende Pfeile angedeutet.

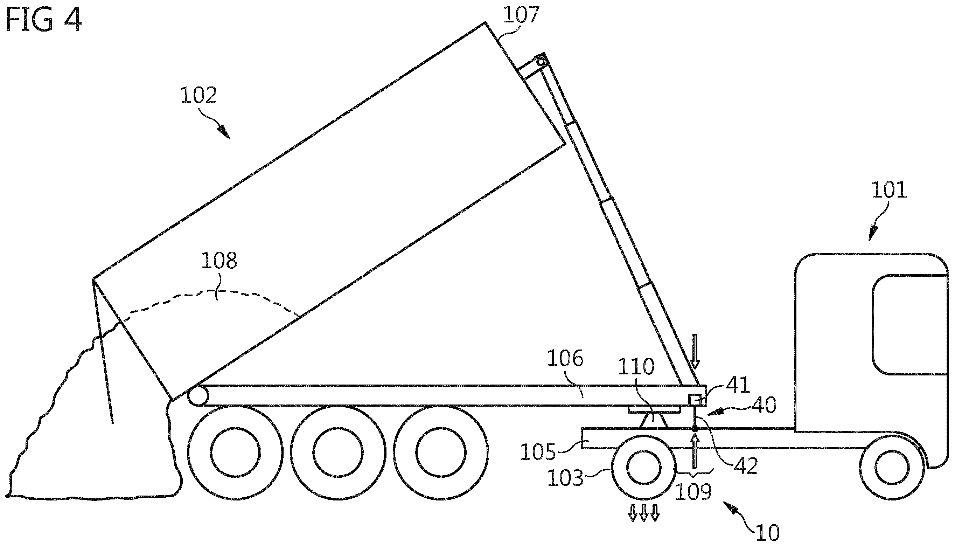

Bei der Ausführungsform der Fig. 1 weist die Vorrichtung 10 eine hintere Versteifungseinrichtung 20 auf, die in Fahrtrichtung gesehen hinter der Kupplung 110 angeordnet ist. Vorrichtung 10 kann zusätzlich oder alternativ zur hinteren Versteifungseinrichtung 20 eine vordere Versteifungseinrichtung 40 aufweisen, die vor der Kupplung 110 angeordnet ist. Eine derartige Ausgestaltung ist nachfolgend mit Bezug auf Fig. 4 näher beschrieben.

Fig. 2 zeigt schematisch eine Ausführungsform der Vorrichtung 10 der Fig. 1, bei der die Versteifungseinrichtung 20 ein Blockierelement in Form eines Balgs 21 aufweist. Die Versteifungseinrichtung 20 ist in einer ausgefahrenen Stellung dargestellt, in der der Balg 21 ausgedehnt ist und über ein Abschlusselement 22 eine Kraft auf einen hinteren Bereich der Zugmaschine 101 aufbringt. Der Balg 21 kann beispielsweise zwei Endplatten haben, wobei eine Endplatte 23 an einem Bodenteil 106 des Aufliegers 102 angebracht ist, insbesondere an einem Rahmen oder einer Bodenplatte des Aufliegers. Die zweite Endplatte kann Teil des Abschlusselements 22 sein, das darüber hinaus eine Pfanne aufweisen kann (nicht dargestellt). Das Abschlusselement 22 wirkt mit einer Konsole 25 zusammen, die in dem hinteren Bereich am Rahmen 105 der Zugmaschine 101 montiert ist. Wird der Balg 21 mit Druckluft beaufschlagt, so schränkt er eine Kippbewegung des Aufliegers 102 relativ zur Zugmaschine 101 um das Lager 111 ein und bringt im hinteren Bereich 104 eine Kraft auf die Konsole 25 auf, wodurch wie vorab beschrieben eine verbesserte Traktion erzielt wird. Die Kippbewegung ist insbesondere in die Richtung eingeschränkt, in der eine Annäherung zwischen Bodenteil 106 und Rahmen 105 in dem Bereich 104 hinter der Sattelkupplung 110 stattfinden würde.

Das Ausfahren der Versteifungseinrichtung 20 und insbesondere das Einbringen von Druckluft in den Balg 21 kann mittels einer Steuereinrichtung 50 gesteuert werden. Bei der Ausführungsform der Fig. 2 umfasst die Steuereinrichtung 50 ein Relaisventil 51, über das Druckluft von einem Arbeitskreis eines Druckluftsystems des Aufliegers 102 oder der Zugmaschine 101 über Leitung 52 dem Balg 21 zuführbar ist. Über das Relaisventil 51 kann gleichermaßen Luft aus dem Balg 21 entlassen werden, wenn die Versteifungseinrichtung 20 eingefahren werden soll. Relaisventil 51 wird mit Druckluft aus dem Druckluftsystem des Aufliegers 102 bzw. der Zugmaschine 101 mittels Leitung 54 und Magnetventil 53 gesteuert. Magnetventil 53 wird elektrisch angesteuert über eine Steuerleitung 55, die beispielsweise mit einem Schalter im Führerhaus der Zugmaschine 101 verbunden sein kann. Andere Möglichkeiten der elektrischen Ansteuerung des Magnetventils 53 sind selbstverständlich ebenfalls denkbar. Durch das Betätigen des entsprechenden Schalters im Führerhaus kann die Versteifungseinrichtung 20 somit in einen ausgefahrenen Zustand gebracht werden, indem die Kippbewegung eingeschränkt wird und Kraft auf den hinteren Bereich 104 der Zugmaschine 101 ausgeübt wird. Um entsprechende Kräfte ausüben zu können muss der Balg 21 eine entsprechende Größe und ein entsprechendes Volumen aufweisen. Da der Balg jedoch über den Arbeitskreis des Druckluftsystems des Aufliegers 102 mit Druckluft versorgt wird, kann das Aufblasen des Balgs 21 und damit das Ausfahren der Versteifungseinrichtung 20 in relativ kurzer Zeit erfolgen.

Der Balg 21 kann beispielsweise ein Balg sein, wie er üblicherweise für Luftfederungen zum Einsatz kommt. Vorzugsweise weist der Balg 1, 2 oder mehr Falten bzw. Einschnürungen auf. Der Balg kann aus mehreren Lagen von Gummi und Gewebe hergestellt sein, beispielsweise aus mehrlagigem Naturkautschuk.

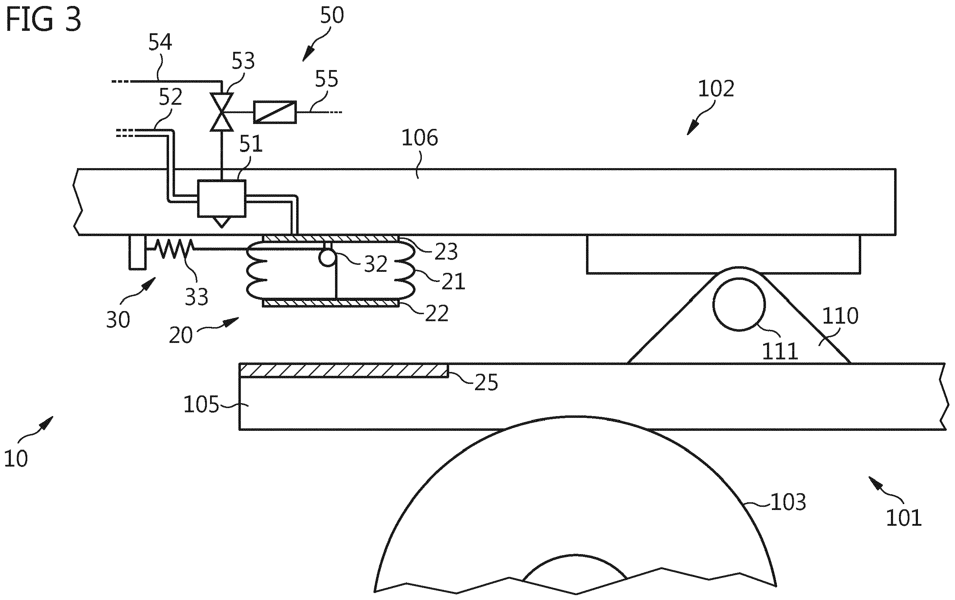

Die Vorrichtung 10 weist des Weiteren einen Einfahrmechanismus bzw. eine Einfahreinrichtung 30 auf, mit der die Versteifungseinrichtung 20 in einen eingefahrenen Zustand bzw. einen Schlafzustand oder Ruhezustand gebracht werden kann. Der Einfahrmechanismus weist ein Zugseil 31 sowie eine Umlenkrolle 32 auf. Das Zugseil 31 ist mit dem Abschlusselement 22, beispielsweise der vorab genannten Pfanne an einem Ende verbunden. Am anderen Ende des Zugseils 31 ist eine Feder 33 vorgesehen, die im ausgefahrenen Zustand der Versteifungseinrichtung 20 gespannt ist. Zum Einfahren der Versteifungseinrichtung 20 wird mittels des Relaisventils 51 die Luft aus dem Balg 21 entlassen. Die gespannte Zugfeder 33 zieht nunmehr mittels Zugseil 31 und Umlenkrolle 32 das Abschlusselement 22 nach oben, wodurch die Versteifungseinrichtung 20 ihren eingefahrenen Zustand erreicht. Dieser ist in Fig. 3 dargestellt. Ein entsprechender Mechanismus ist ebenfalls an der nicht dargestellten gegenüberliegenden Seite des Balgs 21 vorgesehen.

Fig. 3 stellt den eingefahrenen Zustand der Versteifungseinrichtung 20 dar. Die Kippbewegung von Auflieger 102 um Lager 111 ist nun wieder freigegeben, so dass das Gespann den normalen Fahrbetrieb aufnehmen kann. Vorrichtung 10 kann selbstverständlich weitere Elemente umfassen, wie beispielsweise ein Gehäuse, das den Balg 21 im eingefahrenen Zustand schützt. Auch sind andere Ausgestaltungen der Einfahreinrichtung denkbar, wie beispielsweise Zugfedern, die innerhalb des Balgs 21 angebracht sind.

Es sollte klar sein, dass der Balg 21 lediglich eine Implementierung der Versteifungseinrichtung 20 darstellt. Statt des Balgs können beispielsweise eine Blase oder hydraulische bzw. pneumatische Zylinder vorgesehen sein. Diese können auf gleiche Art und Weise durch Anschluss an ein pneumatisches bzw. hydraulisches System ausgefahren werden. Auch sind mechanische Ausgestaltungen denkbar, bei denen beispielsweise eine entsprechende Wirkung durch das Ausfahren eines Gewindebolzens mit einer Drehbewegung erzielt wird. Auch sollte klar sein, dass die Versteifungseinrichtung 20 nicht notwendigerweise am Auflieger 102 angebracht sein muss. Gleichermaßen ist es möglich, die Versteifungseinrichtung 20 an der Zugmaschine 101 anzubringen und stattdessen die Konsole 25 am Auflieger 102 vorzusehen. Der Balg 21 kann dann direkt an das Drucksystem der Zugmaschine 101 angeschlossen werden. Die in Figuren 2 und 3 dargestellte Ausführungsform ist jedoch vorteilhaft, da die Vorrichtung 10 sonst gegebenenfalls einen Kupplungsvorgang zwischen Auflieger 102 und Zugmaschine 101 behindern könnte.

Fig. 4 zeigt schematisch eine Ausführungsform, bei der die Vorrichtung 10 eine vordere Versteifungseinrichtung 40 aufweist. Auch die Versteifungseinrichtung 40 wirkt einer entsprechenden Kippbewegung des Aufliegers relativ zur Zugmaschine entgegen und erhöht damit die Kraft, die auf den hinteren Bereich der Zugmaschine 101 aufgebracht wird. Versteifungseinrichtung 40 übt insbesondere eine Zugkraft aus, mit der ein vorderer Bereich des Aufliegers 102, der vor der Kupplung 110 liegt, in Richtung der Zugmaschine 101 gezogen wird. Dadurch wird die Kraft erhöht, die der Auflieger über die Kupplung 110 auf die Zugmaschine aufbringt.

Versteifungseinrichtung 40 kann beispielsweise dadurch implementiert werden, dass eine Winde 41 und ein Zugseil 42 vorgesehen werden. Versteifungseinrichtung 40 kann insbesondere als Niederzugeinrichtung implementiert werden. Winde 41 kann beispielsweise elektrisch angesteuert werden. Zugseil 42 kann im Bereich 109 vor der Kupplung 110 mit dem Rahmen 105 der Zugmaschine 101 verbunden werden, beispielsweise durch Einhaken. Durch Aktivierung der Winde 41 kann dann eine entsprechende Zugkraft aufgebracht werden, die der Kippbewegung entgegenwirkt und die somit sicherstellt, dass eine ausreichende Kraft auf den hinteren Bereich der Zugmaschine 101 und somit auf die angetriebenen Räder 103 aufgebracht wird. Auch bei dieser Ausführungsform lässt sich damit die Traktion der Zugmaschine 101 beim Abladen von Schüttgut verbessern. In Fig. 4 ist die Zugkraft schematisch durch Pfeile dargestellt.

Andere Implementierungen der vorderen Versteifungseinrichtung 40 sind selbstverständlich denkbar. Beispielsweise kann die Versteifungseinrichtung auch eine mechanische Verriegelung umfassen, um der Kippbewegung zwischen Auflieger und Zugmaschine entgegenzuwirken. Die vordere Versteifungseinrichtung 40 umfasst insbesondere einen Teil, der ausgestaltet ist, um an dem Auflieger 102 im vorderen Bereich 109 vor der Kupplung 110 angebracht zu werden sowie einen Teil, der ausgestaltet ist, um im vorderen Bereich 109 mit der Zugmaschine 101 verbunden zu werden. Versteifungseinrichtung 40 umfasst des Weiteren eine Einrichtung zur Aufbringung einer Zugkraft.

Ebenfalls sind Ausführungsformen denkbar, bei denen die Vorrichtung 10 sowohl die hintere Versteifungseinrichtung 20 als auch die vordere Versteifungseinrichtung 40 aufweist. Der hintere Bereich der Zugmaschine, auf den mittels der Vorrichtung 10 eine erhöhte Kraft aufgebracht werden kann, kann die Bereiche 104 und 109 umfassen, und kann insbesondere ein Bereich sein, der die Kupplung 110 umfasst und sich von dieser bis zum hinteren Ende der Zugmaschine 101 erstreckt.

Im Betrieb kann der Fahrer der Zugmaschine 101 mittels der Steuereinrichtung 50 die Versteifungseinrichtung von dem eingefahrenen Zustand in den ausgefahrenen Zustand bringen, beispielsweise durch Betätigen des entsprechenden Schalters. Dies kann vor dem Abladen des Schüttguts erfolgen, oder nachdem das Schüttgut abgeladen ist und eine Restmenge 108 in der Kippmulde 107 verblieben ist. Mit Ausfahren der Versteifungseinrichtung wird die Traktion auf den angetriebenen Rädern 103 verbessert, sodass die Zugmaschine 101 aus eigener Kraft vorfahren kann, um das verbliebene Schüttgut 108 in der Kippmulde 107 zu entleeren. Mittels der Steuereinrichtung 50 kann anschließend die Versteifungseinrichtung in den eingefahrenen Zustand gebracht werden. Dies kann wiederum von der Führerkabine aus durch Betätigen eines entsprechenden Schalters oder Bedienelements erfolgen. Das Schüttgut kann somit vollständig entladen werden, ohne dass der Fahrer die Führerkabine verlassen muss oder die Hilfe eines weiteren Fahrzeugs notwendig wäre. Die Vorrichtung 10 kann die Traktion der Zugmaschine auch in anderen Situationen verbessern, beispielsweise bei einer Bergfahrt, bei der eine höhere Traktion der Hinterräder der Zugmaschine erforderlich ist.

Die Endplatten des Balgs, das Abschusselement, das bewegliche Element, die Zugseile der Einzugeinrichtung, das Seil oder die Kette der Niederzugeinrichtung sowie die Konsole können aus Stahl gefertigt sein.

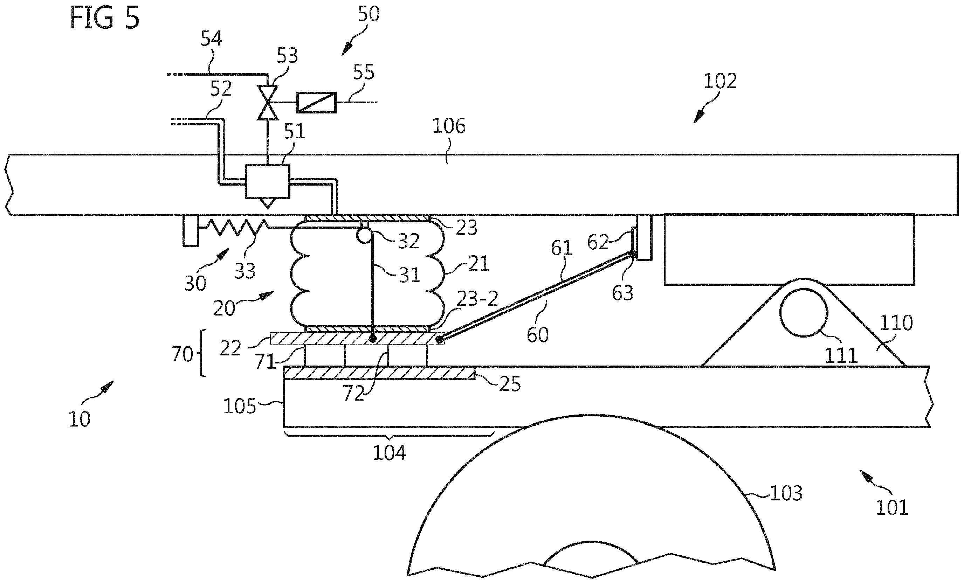

Figur 5 zeigt eine weitere Ausgestaltung der Vorrichtung 10, die bei aktivierter Versteifungseinrichtung 20 für Kurvenfahrten geeignet ist. Die Vorrichtung 10 der Figur 5 ist eine Abwandlung der Vorrichtung 10 der Figur 2, so dass obige Erklärungen sinngemäß für die Vorrichtung 10 der Figur 5 gelten. Bei einer Kurvenfahrt erfolgt eine Verschwenkung des Aufliegers 102 relativ zur Zugmaschine 101, insbesondere um den Königszapfen der Sattelkupplung 110. Damit die Versteifungseinrichtung auch bei einer solchen Kurvenfahrt eine Kraft ausüben kann ist eine Schwenkeinrichtung 70 vorgesehen. Bei der Ausführungsform der Figur 5 weist die Versteifungseinrichtung 20 den Balg 21 mit Endplatten 23 und 23-2 auf. An der Endplatte 23-2 ist das Abschlusselement 22 in Form einer Abschlusspfanne mit seitlich hochgeklappten Rändern (nicht gezeigt) montiert (Element 22 kann auch Abschlussplatte ausgestaltet sein). An dem Abschlusselement 22 sind ein oder mehrere Gleitelemente montiert, hier die Gleitelemente 71 und 72. In der in Figur 5 dargestellten ausgefahrenen Stellung des Balgs 21 kontaktieren die Gleitelemente 71, 72 die Konsole 25 und übertragen die vom Balg 21 ausgeübte Kraft auf diese. Diese kann mit einer Gleitfläche versehen sein, auf der die Gleitelemente 71, 72 gleiten können. Die Gleitfläche kann eine ebene Fläche sein, die lackiert ist oder mit einer besonderen Beschichtung versehen ist, die das Gleiten erleichtert (z.B. Teflon oder ähnliches).

In Figur 5 erfolgt das Gleiten im Wesentlichen senkrecht zur Zeichenebene. Da der Auflieger 102 bei einem Verschwenken eine Drehbewegung um den Königszapfen ausführt, gleiten die Gleitelemente 71, 72 entsprechend auf einem kreissegmentförmigen Pfad um den Königszapfen.

In dem Beispiel der Figur 5 sind zwei Gleitelemente 71, 72 vorgesehen. Diese haben eine quaderförmige Form und sind in Fahrtrichtung hintereinander angeordnet. In Querrichtung (senkrecht zur Zeichenebene) weisen sie ein ähnliche oder dieselbe Länge auf. Die Länge erstreckt sich vorzugsweise über mindestens 50% der Ausdehnung des ausfahrbaren Elements in dieselbe Richtung, vorzugsweise über mindestens 75% dieser Ausdehnung. Selbstverständlich sind auch andere Ausgestaltungen denkbar, wie die Verwendung nur eines Gleitelements oder von drei oder mehr Gleitelementen. Auch kann die Form der Gleitelemente variiert werden. Die Gleitelemente können beispielsweise eine Höhe zwischen 2 und 10 cm aufweisen. Die Gleitelemente sind derart angeordnet, dass eine effektive Kraftübertragung zwischen dem ausfahrbaren Element (Balg 21) und der Konsole 25 sichergestellt ist, insbesondere ohne ein Verkippen zwischen dem Abschlusselement 22 und der Konsole 25.

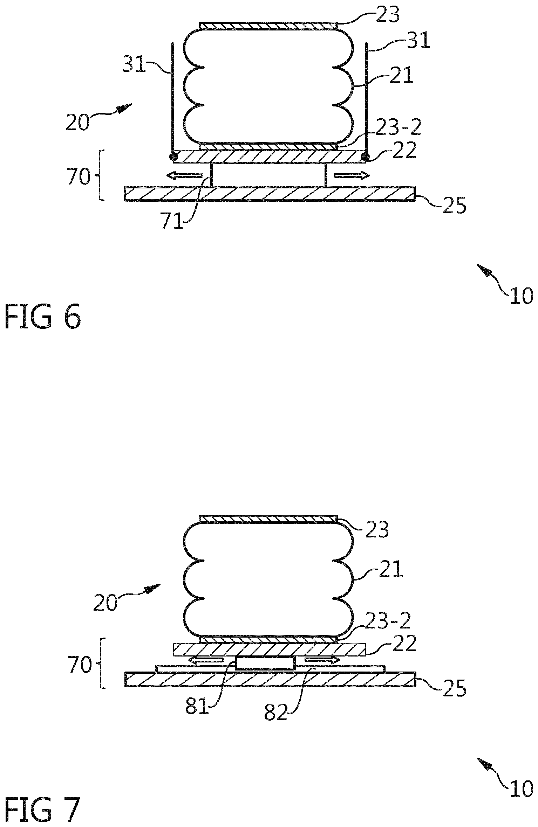

Figur 6 zeigt eine Rückansicht eines Teils der Vorrichtung der Figur 5. Die Gleitbewegung der Gleitelemente 71, 72 auf der Konsole 25 ist durch Pfeile angedeutet. Die Gleitelemente 71, 72 sind an dem Abschlusselement 22 montiert (beispielsweise mittels innenliegender Schrauben) und bewegen sich somit gemeinsam mit der Versteifungseinrichtung 20, die an dem Auflieger 102 angebracht ist. Die Gleitelemente 71, 72 können aus Kunststoff gefertigt sein. Insbesondere bietet sich ein Kunststoff mit guten Gleiteigenschaften an, der imstande ist, entsprechende Drücke zu übertragen. Beispiele sind Polyamid (PA) bzw. Nylon. Andere Kunststoffe, wie Polyoxymethylen, Polycarbonat, Polyetheretherketon (PEEK) oder ähnliche können ebenfalls verwendet werden. Der Kunststoff kann faserverstärkt sein. In Figur 6 sind ebenfalls die seitlich an dem Abschlusselement 22 montierten Zugseile 31 sichtbar.

Die Verwendung der Gleitelemente 71, 72 in der Schwenkeinrichtung 70 hat den besonderen Vorteil, dass der Aufbau einfach und unkompliziert ist und dass die Versteifungseinrichtung 20 auch ausgefahren werden kann, wenn der Auflieger 102 und die Zugmaschine 101 bereits gegeneinander verschwenkt sind.

Die Figur 7 zeigt eine alternative Ausgestaltung der Schwenkeinrichtung 70. Diese weist einen Schlitten 81 sowie eine Schiene 82 auf, auf der der Schlitten 81 gelagert ist. Schlitten 81 kann auf Schiene 82 gleiten oder es können Lager vorgesehen sein, um die Reibung zu verringern. Schlitten 81 ist nicht an dem Abschlusselement 22 montiert, so dass der Schlitten 81 in einer eingefahrenen Stellung der Versteifungseinrichtung 20 auf der Schiene 82 verbleibt. Bei aktivierter Versteifungseinrichtung 20 drückt das Abschlusselement 22 auf den Schlitten 81, so dass Versteifungseinrichtung 20 und Schlitten 81 aufgrund der Haftreibung ortsfest miteinander verbunden sind. Bei einem Verschwenken von Auflieger 102 relativ zu Zugmaschine 101 läuft der Schlitten 81 auf Schiene 82, wie durch Pfeile angedeutet. Schiene 82 kann bogenförmig ausgestaltet sein. Auch mit der in Figur 7 dargestellten Ausgestaltung der Schwenkeinrichtung 70 wird somit eine Kurvenfahrt des Gespanns ermöglicht, während die Versteifungseinrichtung über Schlitten 81 und Schiene 82 einen Druck auf den hinteren Bereich der Zugmaschine ausübt und damit die Traktion der Zugmaschine verbessert.

Weitere Ausgestaltungen der Schwenkeinrichtung 70 sind selbstverständlich denkbar. Die Schwenkeinrichtung 70 kann auch in Kombination mit der vorderen Versteifungseinrichtung 40 verwendet werden. Beispielsweise kann das Zugseil 42 an dem Schlitten 81 angebracht werden, wobei Schlitten 81 und Schiene 82 dann in Fahrtrichtung vor der Kupplung 110 angeordnet werden.

Zur Stabilisierung der Versteifungseinrichtung 20 kann ein Stabilisierungselement 60 vorgesehen werden. Im Beispiel der Figur 5 ist dieses als Schwinge ausgebildet. Die Schwinge weist einen Arm 61 auf, der mit dem Abschlusselement 22, insbesondere der vorab beschriebenen Pfanne, gelenkig verbunden ist. Die Verbindung kann durch ein Scharnier oder Bolzen bereitgestellt werden, so dass eine Relativbewegung zwischen Abschlusselement 22 und Arm 61 nur um eine Achse senkrecht zur Zeichenebene möglich ist. Am anderen Ende ist der Arm 61 über ein weiteres Gelenk 63, insbesondere ein Scharnier, mit einer Montageplatte 62 verbunden, die an dem Auflieger 102 angebracht ist. Die Breite des Arms 61 kann der Breite des Abschlusselements 22, die in Figur 6 dargestellt ist, entsprechen, oder kleiner als diese sein. Vorzugsweise beträgt die Breite des Arms jedoch mindestens 1/4 oder 1/3 der Breite des Abschlusselements 22, so dass eine ausreichende Stabilisierung erreicht wird. Der Arm 61 kann einstückig aus Stahl gefertigt sein, beispielsweise als Hutprofil, C-Profil, U-Profil oder T-Profil, es können jedoch auch zwei Arme vorgesehen sein. Diese können durch Querstreben miteinander verbunden sein.

Die gelenkigen Verbindungen der Schwinge ermöglichen, dass die Versteifungseinrichtung eingefahren und ausgefahren werden kann. Gleichzeitig nimmt die Schwinge Kräfte auf, die auf das Ende der Versteifungseinrichtung 20 wirken, an dem das Abschlusselement 22 angebracht ist. Insbesondere werden Kräfte aufgenommen, die in Fahrtrichtung und quer zur Fahrtrichtung wirken, die also in einer im Wesentlichen horizontalen Ebene wirken. Die Versteifungseinrichtung 20 und insbesondere der Balg 21 werden dadurch stabilisiert. Gerade bei Verwendung der Gleitelemente 71, 72 wirken bei Kurvenfahrt Kräfte quer zur Fahrtrichtung auf das Ende des Balgs 21, die mit dem Stabilisierungselement 60 kompensiert werden können.

Ein Versatz des Abschlusselements 22 in Fahrtrichtung beim Ein- bzw. Ausfahren der Versteifungseinrichtung 20 kann dadurch vermieden werden, dass der Winkel, über den sich der Arm 61 bewegt, klein gehalten wird (Figur 5 ist nicht maßstabstreu gezeichnet). Auch ist es denkbar, den Arm 61 teleskopisch auszugestalten, wodurch die Fähigkeit zur Aufnahme von Querkräften nicht eingeschränkt wird.

Andere Ausgestaltungen des Stabilisierungselements 60 sind ebenfalls denkbar. Beispielsweise kann die Schwinge auch seitlich von oder hinter der Versteifungseinrichtung 20 angeordnet werden. Auch ist das Vorsehen mehrerer derartiger Schwingen denkbar. Alternativ oder zusätzlich kann das Stabilisierungselement 60 auch Führungsschienen aufweisen, die sich zwischen den Endplatten des Balgs 21 erstrecken und die teleskopisch ausgestaltet sein können. Auch damit lassen sich Querkräfte wirkungsvoll kompensieren.

Es sollte klar sein, dass das Stabilisierungselement 60 optional ist. Beispielsweise kann bei Verwendung eines pneumatischen Zylinders anstelle des Balgs 21 der Zylinder selbst entsprechende Querkräfte aufnehmen.

Die vorab beschriebene Vorrichtung in ihren verschiedenen Ausgestaltungen ist relativ einfach aufgebaut und nahezu wartungsfrei. Des Weiteren lässt sie sich kostengünstig implementieren. Insbesondere kann sie als Nachrüstsatz an einem herkömmlichen Auflieger 102 oder an einer herkömmlichen Zugmaschine 101 montiert werden. Dadurch werden wesentliche Kostenvorteile gegenüber herkömmlichen Lösungen erreicht. Des Weiteren ist die Vorrichtung bedienerfreundlich und schnell einsatzbereit. Somit kann der Abladevorgang beschleunigt werden.

## Patentansprüche

1. Vorrichtung zur Erhöhung der Traktion einer Zugmaschine (101), an die mittels einer Kupplung (110) ein Auflieger (102) gekoppelt ist, wobei die Vorrichtung (10) mindestens eine Versteifungseinrichtung (20, 40) umfasst, die ausgestaltet ist, um mit dem Auflieger (101) und der Zugmaschine (102) zusammenzuwirken und einer Kippbewegung des Aufliegers (102) relativ zur Zugmaschine (101) derart entgegenzuwirken, dass die Kraft erhöht wird, die der Auflieger (102) auf einen hinteren Bereich der Zugmaschine (101) aufbringt.

2. Vorrichtung nach Anspruch 1, wobei die Versteifungseinrichtung (20) eine eingefahrene Stellung aufweist, in der die Kippbewegung zwischen Auflieger (102) und Zugmaschine (101) in der entsprechenden Richtung freigegeben ist, und wobei die Versteifungseinrichtung (20) eine ausgefahrene Stellung aufweist, in der die Kippbewegung zwischen Auflieger (102) und Zugmaschine (101) in der entsprechenden Richtung eingeschränkt ist, wobei die Versteifungseinrichtung (20) ein Blockierelement aufweist, das durch Ausdehnung oder durch Ausfahren die Versteifungseinrichtung (20) von der eingefahrenen Stellung in die ausgefahrene Stellung bringen kann, wobei das Blockierelement vorzugsweise ein Balg (21), eine Blase oder ein pneumatischer bzw. hydraulischer Zylinder ist.

3. Vorrichtung nach Anspruch 1 oder 2, wobei die Versteifungseinrichtung (20) eine hintere Versteifungseinrichtung ist, die ausgestaltet ist, um in Fahrtrichtung hinter der Kupplung angeordnet zu werden, und wobei die Versteifungseinrichtung (20) weiterhin ausgestaltet ist, um sich an dem Auflieger abzustützen und auf die Zugmaschine eine Kraft aufzubringen und die Zugmaschine und den Auflieger in einem Bereich hinter der Kupplung auseinanderzudrücken.

4. Vorrichtung nach einem der vorstehenden Ansprüche, wobei die Versteifungseinrichtung (20) einen pneumatisch ausfahrbaren Balg (21) aufweist, wobei der Balg (21) ein erstes Ende aufweist, das ausgestaltet ist, um an dem Auflieger (102) angebracht zu werden, und wobei der Balg (21) ein zweites gegenüberliegendes Ende aufweist, an dem ein Abschlusselement (22) vorgesehen ist, das zur Übertragung einer Kraft auf die Zugmaschine im ausgefahrenen Zustand des Balgs (21) ausgestaltet ist.

5. Vorrichtung nach einem der vorstehenden Ansprüche, wobei die Vorrichtung des Weiteren einen Einfahrmechanismus (30) aufweist, der ausgestaltet ist, um die Versteifungseinrichtung (20) in eine eingefahrene Stellung zu bringen, in der die Versteifungseinrichtung die Kippbewegung freigibt, wobei die Einfahreinrichtung (30) vorzugsweise Zugseile aufweist, die an einem Abschlusselement (22) der Versteifungseinrichtung (20) befestigt sind und mit denen eine rückstellende Kraft auf das Abschlusselement (22) aufbringbar ist.

6. Vorrichtung nach einem der vorstehenden Ansprüche, wobei die Vorrichtung (10) des Weiteren eine Schwenkeinrichtung (70) umfasst, die ausgestaltet ist, um bei aktivierter Versteifungseinrichtung (20, 40) ein bei Kurvenfahrt auftretendes Verschwenken der Zugmaschine relativ zum Auflieger zu ermöglichen.

7. Vorrichtung nach Anspruch 6, wobei die Schwenkeinrichtung (70) mindestens ein Gleitelement (71, 72) aufweist, das derart angeordnet und ausgestaltet ist, dass es bei aktivierter Versteifungseinrichtung (20, 40) ein Gleiten zwischen einem ersten Teil der Vorrichtung (10), der ortsfest an dem Auflieger (102) anbringbar ist und einem zweiten Teil der Vorrichtung (10), der ortsfest an der Zugmaschine anbringbar ist, ermöglicht.

8. Vorrichtung nach Anspruch 6 oder 7, wobei die Versteifungseinrichtung ein ausfahrbares Element in Form eines Balgs oder eines hydraulischen oder pneumatischen Zylinders, mit dem die Versteifungseinrichtung in eine ausgefahrene Stellung bringbar ist, in der die Versteifungseinrichtung der Kippbewegung des Aufliegers relativ zur Zugmaschine entgegenwirkt, sowie ein Abschlusselement (22) aufweist, das an einem Ende des ausfahrbaren Elements angeordnet ist, wobei die Schwenkeinrichtung (70) mindestens ein Gleitelement aufweist, das an dem Abschlusselement (22) angebracht ist.

9. Vorrichtung nach Anspruch 7 oder 8, wobei das Gleitelement einen Körper aus Kunststoff umfasst.

10. Vorrichtung nach einem der vorstehenden Ansprüche, wobei die Versteifungseinrichtung (20) ein erstes Ende, das ausgestaltet ist, um an dem Auflieger (102) oder der Zugmaschine (101) angebracht zu werden, und ein zweites Ende aufweist, und wobei die Vorrichtung (10) des Weiteren ein Stabilisierungselement (60) aufweist, das an dem zweiten Ende der Versteifungseinrichtung (20) angebracht ist, wobei das Stabilisierungselement (60) ausgestaltet ist, um zumindest bei aktivierter Versteifungseinrichtung (20) diese in einer Richtung zu stützen, die senkrecht zur der Richtung ist, in der die Versteifungseinrichtung (20) Kraft auf den hinteren Bereich der Zugmaschine aufbringt.

11. Vorrichtung nach Anspruch 10, wobei das Stabilisierungselement (60) eine Schwinge aufweist, die an einem Ende an dem Auflieger (102) beziehungsweise der Zugmaschine (101) anbringbar ist und deren anderes Ende an dem zweiten Ende der Versteifungseinrichtung (20) angebracht ist.

12. Vorrichtung nach einem der vorstehenden Ansprüche, wobei die Versteifungseinrichtung (20) einen Balg (21), der ein erstes Ende aufweist, das ausgestaltet ist, um an dem Auflieger angebracht zu werden, und ein Abschlusselement (22), das an einem zweiten Ende des Balgs (21) angebracht ist, umfasst, und wobei die Vorrichtung (10) des Weiteren aufweist:
- einen Einfahrmechanismus (30), der an dem Abschlusselement (22) angebracht ist und der ausgestaltet ist, um den Balg (21) von der ausgefahrenen Stellung in die eingefahrene Stellung zu bringen.
- eine Konsole (25), die ausgestaltet ist, um an der Zugmaschine (101) angebracht zu werden und eine Kraft aufzunehmen, die der Balg (21) in der ausgefahrenen Stellung auf die Konsole (25) aufbringt,
- ein Stabilisierungselement (60), das an dem Abschlusselement (22) gelenkig angebracht ist, und
- eine Schwenkeinrichtung (70), die eine Bewegung der Konsole (25) relativ zu dem Abschlusselement (22) ermöglicht, wenn der Balg (21) in der ausgefahrenen Stellung eine Kraft auf die Konsole (25) aufbringt, wobei die Bewegung ermöglicht wird in einer Richtung, die einem Verschwenken der Konsole relativ zu dem Abschlusselement bei Kurvenfahrt von Zugmaschine und Auflieger entspricht.

13. Vorrichtung nach Anspruch 12, wobei die Vorrichtung des Weiteren umfasst:
- einen Druckluftanschluss, über den der Balg (21) mit Druckluft beaufschlagbar ist, um den Balg von einer eingefahrenen Stellung in eine ausgefahrene Stellung zu bringen.

14. Auflieger, Zugmaschine oder Gespann, das eine Zugmaschine und einen an die Zugmaschine gekoppelten Auflieger aufweist, wobei der Auflieger (102), die Zugmaschine (101) beziehungsweise das Gespann eine Vorrichtung (10) nach einem der Ansprüche 1-13 aufweist.

15. Verfahren zur Erhöhung der Traktion einer Zugmaschine (101), an die mittels einer Kupplung (110) ein Auflieger (102) gekoppelt ist, wobei das Verfahren umfasst:
- Betätigen einer Versteifungseinrichtung (20, 40), die mit dem Auflieger (102) und der Zugmaschine (101) zusammenwirkt und einer Kippbewegung des Aufliegers (102) relativ zur Zugmaschine (101) derart entgegenwirkt, dass die Kraft erhöht wird, die der Auflieger (102) auf einen hinteren Bereich der Zugmaschine (101) aufbringt.
